# EUROPEAN PATENT APPLICATION

(11) **EP 4 394 626 A1**
(43) Date of publication of application: **03.07.2024**
(21) Application number: 22216820.5
(22) Date of filing: 27.12.2022
(51) Int. Cl.: G06F 18/21, G06V 20/58, G06V 30/19

(54) **CLASSIFICATION OF OBJECTS PRESENT ON A ROAD**

(71) Applicant: Zenseact AB, 417 56 Gothenburg (SE)
(72) Inventor: VERBEKE, Willem, 412 60 Göteborg (SE); JOHNANDER, Joakim, 587 37 Linköping (SE)
(74) Representative: Zacco Sweden AB

(57) **Abstract**

The present disclosure relates to a method, system, a vehicle and a computer-readable storage medium and a computer program product for determining an association of at least one object to a target object class, the at least one object being present in a surrounding environment of a vehicle travelling on a road. The method comprises obtaining sensor data from a sensor system of the vehicle, the sensor data comprising one or more images, captured by a vehicle-mounted camera, of the surrounding environment of the vehicle. The method further comprises determining a presence of the at least one object in the surrounding environment of the vehicle based on the obtained sensor data and obtaining a finite sub-set of annotated images being representative of at least the target object class. The finite sub-set comprises a number of annotated images smaller than a threshold value number. Further, the method comprises determining a preliminary association between the at least one object and the target object class and when the preliminary association is determined, the method further comprises producing an image label for the one or more images of the at least one object.

## Description

### TECHNICAL FIELD

The disclosed technology relates to methods and systems for determining an association of at least one object to a target object class, wherein the at least one object is present in a surrounding environment of a vehicle travelling on a road. In particular, but not exclusively the disclosed technology relates to recognition and classification of objects being present in the surrounding environment of the vehicle.

### BACKGROUND

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control (ACC) collision avoidance system, forward collision warning, etc. - are electronic systems that may aid a vehicle driver while driving. Today, there is ongoing research and development within a number of technical areas associated to both the ADAS and the Autonomous Driving (AD) field. ADAS and AD will herein be referred to under the common term Automated Driving System (ADS) corresponding to all of the different levels of automation as for example defined by the SAE J3016 levels (0 - 5) of driving automation, and in particular for level 4 and 5.

ADS solutions have already found their way into a majority of the new cars on the market with only rising prospects of utilization in the not too distant future. An ADS may be construed as a complex combination of various components that can be defined as systems where perception, decision making, and operation of the vehicle are performed by electronics and machinery instead of or in tandem with a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

An imperative aspect of achieving reliable autonomous functionality for the intended autonomous and semi-autonomous vehicles is to obtain a comprehensive understanding of the objects present in the surrounding environment of the vehicle. A nearly endless variety of objects such as different traffic signs, signals or wild life, etc. exists on the roads across different countries and geographical regions. For instance, the number of semantic traffic sign classes are already large and differing in various countries. Even further, different countries typically have different appearances of common traffic sign classes as well as their own specific object classes. This renders the task of detection, recognition and classification of these objects to be substantially challenging. One conventional solution to tackle this problem is to use deep learning algorithms trained on a large amount of labelled data set representing these objects. However, a vast majority of these objects such as certain traffic sign types may be exceedingly rare, occurring only once in thousands of kilometres on a road or be of extreme variety based on their geographical and national territories. This imposes an exhausting burden on data collection projects designed for generating training data for utilization with automated driving applications. Furthermore, neural networks trained with a standard training scheme present limited efficiency since they needs many training data samples before being able to detect a new type of object. For rare types of objects, the conventional approach may even be prohibitively expensive, and time-consuming.

There is thus a pressing need in the art for novel and improved solutions for classification of various objects on roads with high accuracy and speed and without the need for extensive data collection.

### SUMMARY

The herein disclosed technology seeks to mitigate, alleviate or eliminate one or more of the above-identified deficiencies and disadvantages in the prior art to address various problems relating to classification of objects.

Various aspects and embodiments of the disclosed invention are defined below and in the accompanying independent and dependent claims. The term exemplary is in the present context to be understood as serving as an instance, example or illustration.

A first aspect of the disclosed technology comprises a method for determining an association of at least one object to a target object class, the at least one object being present in a surrounding environment of a vehicle travelling on a road. The method comprises obtaining sensor data from a sensor system of the vehicle, the sensor data comprising one or more images, captured by a vehicle-mounted camera, of the surrounding environment of the vehicle. The method further comprises determining a presence of the at least one object in the surrounding environment of the vehicle based on the obtained sensor data. Further, the method comprises obtaining a finite sub-set of annotated images being representative of at least the target object class, the finite sub-set comprising a number of annotated images smaller than a threshold value number. The method also comprises determining, based on the obtained sensor data comprising one or more images of the at least one object and the obtained finite sub-set of annotated images, a preliminary association between the at least one object and the target object class. When i.e. in instances that the preliminary association is determined, the method further comprises producing an image label for the one or more images of the at least one object in order to obtain one or more labelled images indicating the preliminary association of the at least one object with the target object class. Further, the method comprises selecting the one or more labelled images for generating a corresponding object identification annotation for the one or more labelled images.

In some exemplary embodiments, the method may further comprise transmitting the selected one or more labelled images of the at least one object to a remote server and/or storing the selected one or more labelled images in a memory of the vehicle for a subsequent transmission to the remote server for generating the corresponding object identification annotation based at least on the transmitted one or more labelled images of the at least one object from the vehicle.

In several embodiments, the method may further comprise storing the selected one or more labelled images in a memory of the vehicle and generating the corresponding object identification annotation for the one or more labelled images of the at least one object.

In some embodiments the method may further comprise obtaining a set of selected one or more labelled images of the at least one object from a remote server and/or from a plurality of vehicles travelling on the road, wherein the set of selected one or more labelled images of the at least one object comprises the one or more labelled images of the at least one object produced and selected by each vehicle of the plurality of vehicle. The method may further comprise generating the corresponding object identification annotation based on the obtained set of the selected one or more labelled images of the at least one object.

According to yet further embodiments the method may further comprise forming a training data set for a machine learning, ML, algorithm configured for identification of the at least one object based on the generated object identification annotation. Additionally or alternatively, the method may comprise transmitting the generated object identification annotation to a remote server for forming the training data set for the machine learning, ML, algorithm.

In several embodiments, the method may further comprise obtaining, from the remote server, an updated finite sub-set of annotated images being updated with the generated object identification annotation for the one or more labelled images of the at least one object. Additionally or alternatively the method may further comprise updating the finite sub-set of annotated images with the generated object identification annotation for the one or more labelled images of the at least one object.

The present inventors have accordingly realized that by using a data-driven approach according to the presented method and systems herein scalability, speed and reproducibility can be achieved in classification of objects such as roadside objects including traffic objects without the stringent requirements on massive data collection. The data-driven approach of the present disclosure provides a flexible, cost-efficient, and rapid approach for generating training data for training neural networks and ML algorithms, specifically for objects for which many samples of real-world data are neither collected nor available. This also greatly contributes to solving the problem of identification of rare objects in scenarios involving multiple environmental variables or conditions happening simultaneously or outside the conventional levels.

In several embodiments, the method may further comprise determining the preliminary association between the at least one object and the target object class by means of a few shot learning model.

In several embodiments, the vehicle may comprise an Automated Driving System, ADS and the method may be performed by a processing circuitry of the vehicle.

In a second aspect of the disclosed technology there is provided a (non-transitory) computer-readable storage medium storing one or more programs configured to be executed by one or more processors of a processing system, the one or more programs comprising instructions for performing the method according to any one of the embodiments of the method disclosed herein.

With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect of the present disclosure, there is provided a computer program product comprising instructions which, when the program is executed by one or more processors of a processing system, causes the processing system to carry out the method according to any one of the embodiments of the method disclosed herein.

According to a further fourth aspect, there is provided a system for determining an association of at least one object to a target object class, the at least one object being present in a surrounding environment of a vehicle travelling on a road. The system comprises processing circuitry configured to obtain sensor data from a sensor system of the vehicle, the sensor data comprising one or more images, captured by a vehicle-mounted camera, of the surrounding environment of the vehicle. The processing circuitry is further configured to determine a presence of the at least one object in the surrounding environment of the vehicle based on the obtained sensor data and to obtain a finite sub-set of annotated images being representative of at least the target object class, the finite sub-set comprising a number of annotated images smaller than a threshold value number. The processing circuitry is further configured to determine, based on the obtained sensor data comprising one or more images of the at least one object and the obtained finite sub-set of annotated images, a preliminary association between the at least one object and the target object class. When i.e. in instances that the preliminary association is determined, the processing circuitry is further configured to produce an image label for the one or more images of the at least one object in order to obtain one or more labelled images indicating the preliminary association of the at least one object with the target object class. Further, the processing circuitry is configured to select the one or more labelled images for generating a corresponding object identification annotation for the one or more labelled images.According to yet another fifth aspect, there is provided a vehicle comprising one or more vehicle-mounted sensors configured to monitor a surrounding environment of the vehicle. The vehicle further comprises a localization system configured to monitor a pose of the vehicle i.e. geographical position and heading of the vehicle on a road. The vehicle further comprises a system according to the fourth aspect and various embodiments of the fourth aspect. The vehicle may further comprise an ADS system for controlling one or more of acceleration, steering, and braking of the vehicle.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

It is to be noted that all the embodiments, elements, features and advantages associated with the first aspect also analogously apply to the second, third, fourth and the fifth aspects of the present disclosure.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings. The drawings are not to scale.
Fig. 1 illustrates a schematic top view of a road and at least one vehicle traveling on the road in accordance with several embodiments of the present disclosure.
Fig. 2 shows a schematic block diagram in accordance with several embodiments of the present disclosure.
Fig. 3 shows a schematic flowchart illustrating a method in accordance with several embodiments of the present disclosure.
Fig. 4 shows a schematic side view illustration of the vehicle comprising the control system in accordance with some embodiments of the present disclosure.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth. As used herein, the term "if" may be construed to mean "when or "upon" or "in an instance of" or "in response to determining or "in response to detecting" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

In the following description of exemplary embodiments, the same reference numerals denote the same or similar components.

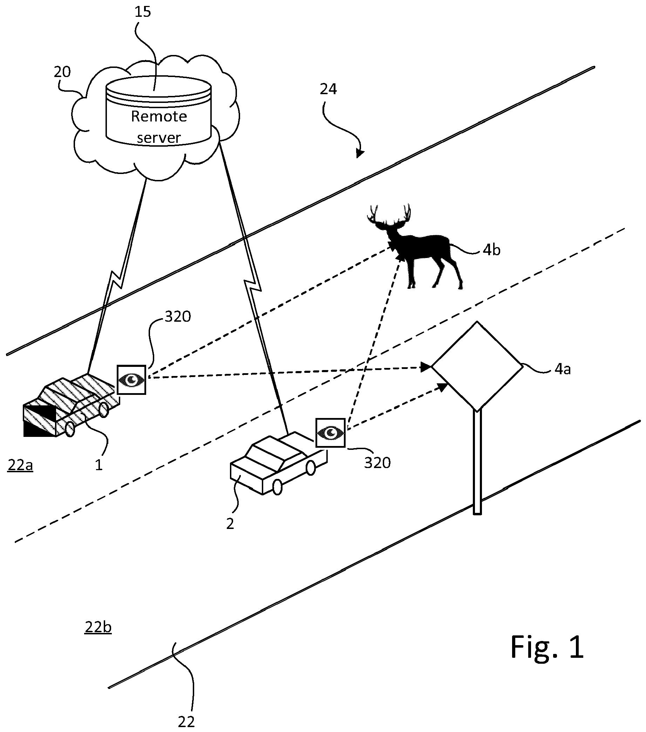

Fig. 1 shows a schematic perspective top view of a vehicle 1 in a hatched line shaded pattern. The vehicle 1 may also be referred to as the ego-vehicle. Moreover, Fig. 1 shows at least one external vehicle 2 traveling on the same portion 24 of a road 22 as the ego vehicle 1. In some embodiments, the at least one external vehicle 2 may be present in portion 24 at the same time as the ego vehicle 1, however in several embodiments the at least one external vehicle 2 may be present in portion 24 of road 22 at another occasion i.e. point in time than the ego vehicle 1. The ego vehicle 1 and the at least one external vehicle 2 may be comprised in a fleet of vehicles and thus in several embodiments and aspects data from the fleet of vehicles comprising one or more vehicles 1, 2 may be collected and analyzed. It should be appreciated that even though in the examples of this description such as in Fig. 1 only one external vehicle 2 is illustrated and described, examples and embodiments can be equally applied to a plurality of vehicles comprised in the fleet. Vehicle 2 may be an identical or similar vehicle to the ego vehicle 1 i.e. having the same or similar functionalities and components and capable of executing and performing various aspects of the presented technology herein.

In several examples and embodiments, the road 22 may be any type of road e.g. part of a motorway, freeway or expressway. The road may also be a country road, rural road or any other carriageway. The road may have a plurality of lanes such as more than one lane in the same travelling direction e.g. two or more lanes 22a, 22b or at least one lane in each travelling direction as is usually the case for rural roads. The road 22 has two lanes 22a and 22b extending in the same direction in this example.

The vehicle 1 and/or the at least one external vehicle 2 may comprise an Automated Driving System (ADS). In the present context, the ADS comprises both ADAS and AD systems. In some embodiments, the ADS of the ego vehicle may comprise one or more ADS features that are preferably a level 2 feature or higher according to SAE J3016 levels of driving automation for on-road vehicles. In the present context, an ADS feature may be in the form of an autopilot feature, a traffic jam pilot, a highway pilot, or any other SAE J3016 level 2+ ADS feature.

There is at least one object 4a, 4b depicted in Fig. 1 which may be arranged or may be present at any part of the road 22 e.g. on the road portion 24 on which the travelling vehicle 1 is depicted. The at least one object 4a, 4b may be a traffic object comprising traffic signs or signals such as traffic lights or warning signs, etc. In some embodiments the at least one object 4a, 4b may include wild life or various species of animals. In some other embodiments and examples, the at least one object may be any type of object present on the road examples of which may include debris, construction materials, different vegetation, fallen trees, other vehicles, roadside obstacles, road barriers, etc.

The ego vehicle 1 comprises a control system 10 or otherwise referred to as the control apparatus 10 which may be a separate entity or may be a part of the overall ADS architecture of the vehicle, and may accordingly be a module or component of the ADS. The control system 10 of the vehicle 1 comprises control circuitry 11 or otherwise referred to as processing circuitry 11 configured to obtain data comprising information about a surrounding environment of the vehicle 1. In several aspects and embodiments, the information and data of the surrounding environment of the vehicle 1 may be obtained from a sensor system 320 of the vehicle 1. The surrounding environment of the ego-vehicle can be understood as a general area around the ego-vehicle in which objects (such as other vehicles, landmarks, obstacles, etc.) can be detected and identified by vehicle sensors (radar, LIDAR, cameras, etc.), i.e. within a sensor range of the ego-vehicle.

The vehicle 1 may have access to and utilize map data, more specifically HD map data. An HD-map is in the present context to be understood as map comprising data with highly accurate and realistic representations of the road travelled upon by the vehicle 1. In more detail, HD-maps may be understood as maps that are particularly built for autonomous driving purposes. These maps have an extremely high precision, oftentimes at a centimeter-level. Moreover, the maps generally contain information such as where the lanes are, where the road boundaries are, where the curves are, how high the curves are, and so forth.

The control system 10 is configured for obtaining sensor data from a sensor system 320 of the ego vehicle 1 travelling on the road 22. The obtained sensor data may comprise information about lane marker geometry on the one or more lanes of the road 22, lane marker type (e.g. solid, dashed, double marker, etc.) on the road 22, traffic sign information 4, road barrier information such as presence or characteristics of speed bumps or any other road obstruction objects, etc. In several aspects and embodiments, the sensor data may comprise one or more images of the surrounding environment of the vehicle 1 being captured by a vehicle-mounted camera (not shown) as a part of the sensor system 320. The camera in the present context also includes a plurality of vehicle-mounted cameras mounted on several parts of the ego vehicle 1 for capturing images of a surrounding environment of the ego vehicle 1. The captured images may be stored locally in a memory 12 of the ego vehicle 1 and/or be transmitted to an external network 20 such as a cloud network 20, with which the ego vehicle 1 is in communication.

The control system 10 of the ego vehicle 1 is further configured to determine a presence of at least one object 4a, 4b in the surrounding environment of the ego vehicle 1 based on the obtained sensor data.

Further, the control system 10 is configured to obtain a finite sub-set of annotated images being representative of at least the target object class. The finite sub-set which may also be referred to as a support set comprises a number of annotated images smaller than a threshold value number.

The object 4a, 4b in the present context is to be construed as being an unclassified or uncharted object for a neural network. In other words the at least one object may be a novel object for the neural network configured for identifying objects. In order to generate training data for the neural network the novel object can be classified in a corresponding object class which may be used for training the neural network.

The target object class here encompasses an object class for which enough information is not available yet. Further data samples need to be collected and classified in the target object class for the target object class to be considered as a charted object class. The target object class may in some embodiments or aspects be a novel object class for which very limited information is available. Alternatively, the target object class may be an already identified object class for which at least a few data samples have been collected and annotated yet additional data is required for the target object class . In some embodiments and aspects, sub-classes of an already known object class such as a novel variation of a known class of traffic signs may be designated as a target object class.

The support set in several embodiments and aspects comprises only a few or limited number of annotated samples e.g. a few annotated images of a traffic object which are considered to be a representative of at least the target object class. In some examples, the few annotated samples may comprise curated pictograms representative of the target object class. In the present context, a few or a limited number of annotated images being comprised in the finite sub-set is thus to be construed as the number of available annotated images representing the target object class which is significantly smaller than the number of annotated images conventionally collected and required for training of neural networks. In several aspects and embodiments, the finite sub-set may comprise only one annotated image, or simply a few annotated images like two, three, four, five, ten, twenty and so forth annotated images representative of the target object class.

The threshold value number in the present context highlights the limited amount of information that is available for classification of the objects in their corresponding target object class. The threshold value may thus be significantly smaller than the amount of data e.g. number of annotated images or data samples required in a training data set for conventional training schemes of neural networks. In some instances and by way of example only, the threshold value may be at most 2, or at most 5, or at most 10, or at most 100 available annotated images and the like.

In several embodiments and aspects, the finite sub-set may comprise a limited number of annotated images for a plurality of target object classes. The number of available annotated images for each target object class may similarly comprise only a few available annotated images smaller than a threshold value number for each target object class. The total number of available annotated images for the plurality of target object classes of the entire finite sub-set may also be smaller than the threshold value number.

In several embodiments, the control system 10 is further configured to determine a preliminary association between the detected at least one object 4a, 4b on the road 22 and the target object class. The target object class is formed to establish a classification of the at least one detected object 4a, 4b by recognition of the at least one object 4a, 4b and assigning that object 4a, 4b to that target object class.

The control system 10 is configured to establish and determine the preliminary association based on the obtained sensor data from the sensor system 320 of the vehicle comprising the one or more images of the at least one object 4a, 4b as well as on the obtained finite sub-set of annotated images representative of the corresponding target object class.

The control system 10 is thus configured to obtain the finite sub-set for object 4a, 4b that is to be classified. The finite sub-set is curated with one or few annotated images as training samples, which represent the object class for which further sample collection is required i.e. the target object class. The control system 10 is further configured to determine if the input one or more images of the object conform to the one or few annotated images representative of the target object class depicted in the finite sub-set. In several embodiments and aspects, the control system 10 is configured to iteratively execute the determination of the preliminary association of the one or more images of the detected object 4a, 4b with the target object class depicted in the finite sub-set.

In several aspects and embodiments, the control system 10 may be configured for determining the preliminary association between the at least one object 4a, 4b and the target object class by means of a few shot learning (FSL) model. The FSL model may be implemented in and executed by the processing circuitry 11 of the control system 10 of the vehicle 1.

FSL in the present context is to be construed as a series of techniques and algorithms used for developing a neural network model with a small amount of training data. In the few- shot learning approach, the model receives both the one or more images of the detected object and the support set as input. During the FSL training the model is expected to predict whether the input one or more images of the detected object belongs to the target object class depicted in the support set. This allows the neural network model to classify and recognize new data after it is exposed to only a few training instances. When referred to as the FSL model in the present description, it should be appreciated that the term FSL model also encompasses scenarios wherein there is only one annotated training data sample available in the support set, an otherwise termed one-shot model configuration.

As mentioned earlier, conventionally machine learning algorithms and neural networks such as supervised machine learning algorithms, may be trained, tested and verified based on a massive amount of conventional real-world data. The trained neural network may accordingly be configured for predicting object classes of the detected objects wherein one or more images of the detected objects are typically input to the trained neural network. The trained model is expected to generalize to previously unseen images of detected objects, however for the model to recognize an object, the object in question has to be present in the training set of the neural network.

The training data is usually obtained through driving the ego vehicle 1, or a plurality of vehicles comprised in a fleet of vehicles, or dedicated test vehicles on various types of roads under a variety of environmental conditions and for suitable periods of time to collect and evaluate large data sets of detected objects on the road. However, the very large variety of objects being present on the road and in the surrounding environment of the vehicle may render the task of data collection and formation of corresponding training data sets practically unattainable. This is even more relevant for scenarios when the object is a rare object such a traffic object e.g. a traffic sign or signal, which has newly been introduced into traffic and for which no adequate amount of data is available yet. Another example may be rare species of animals, which are not completely classified and may drastically vary based on their geographical habitats.

The present inventors have realized that by using a data-driven approach comprising the use of FSL models scalability, speed and reproducibility can be achieved in classification of objects such as roadside traffic objects without the stringent requirements on massive data collection. The data-driven approach of the present disclosure provides a flexible, cost-efficient, and rapid approach for generating training data for training neural networks and ML algorithms, specifically for objects for which many samples of real-world data are neither collected nor available. This also greatly contributes to solving the problem of identification of rare objects in scenarios involving multiple environmental variables or conditions happening simultaneously or outside the conventional levels.

FSL model training approach presented herein provides notable advantages over the traditional training approaches for machine learning algorithms specifically concerning training data collection. Unlike traditional training schemes in which the neural networks should be exposed to a very large amount of training data, the presented FSL model training approach enables classification of objects in their respective object classes with minimal availability of prior information about the object and its corresponding target object class. The FSL model advantageously requires the support set containing only one or a few annotated training samples of the target object classes.

Thus, in several aspects and embodiments, the control system 10 of the vehicle 1 may be configured to provision the one or more images of the at least one object 4a, 4b, obtained by the vehicle sensor system 320, as well as the obtained support set comprising the one or few annotated images representative of the target object class, as input to the FSL model. Accordingly, the FSL model is configured to provide the preliminary association between the at least one object 4a, 4b and the target object class.

In several aspects and embodiments, the support set may be constructed to include one or few annotated images of at least the target object class. In some embodiments, the support set may be constructed to include the one or few annotated images for each target object class of a plurality of target object classes curated for the FSL model. The FSL model may be implemented by utilizing several approaches known in the art. By way of example, the FSL model may be configured to encode each image of the one or few annotated images into a feature vector, using an encoder such as a ResNet without the terminal classifier. This provides a set of feature-vectors, each having an associated tag. The obtained one or more images of the at least one object 4a, 4b are also initially encoded with the same image encoder used for encoding the annotated images of the support set. The resulting feature vector for the object 4a, 4b is then compared to each element of the set of feature vectors of the one or few annotated images for each target object class. The control system 10 may be configured to perform the comparison by utilizing a similarity metric e.g. by means of cosine similarity or Euclidian distance metrics. The resulting similarities may then be provided to a normalization function such as a softmax function to normalize the similarity outputs of the FSL model to a probability distribution. Each output of the softmax function is then interpreted as the probability that the one or more images of the at least one object 4a, 4b has the same tag as the corresponding feature vector of the one or few annotated images of the target object class. This way the FSL model is configured to establish the preliminary association of the at least one object 4a, 4b with the target object class and thus preliminarily classify the at least one object 4a, 4b.

In several embodiments and aspects, when the preliminary association between the at least one object 4a, 4b and the corresponding target object class is determined, the control system 10 is further configured to produce an image label for the one or more images of the at least one object 4a, 4b in order to obtain one or more labelled images indicating the preliminary association of the at least one object 4a, 4b with the target object class. Further, the control system 10 is configured to select the one or more labelled images for generating a corresponding object identification annotation for the one or more labelled images. In other words, the selected images are labelled by the control system 10 as candidates to be used for accurate classification, recognition and identification of the at least one object 4a, 4b. Even further, in several embodiments and aspects the labelled images may be used for generating object identification annotations which could be utilized for forming a training data set for an M L algorithm configured for identification of the at least one object 4a, 4b.

When the at least one object 4a, 4b is a traffic object such as a traffic sign and/or a traffic signal, the one or more labelled images are utilized for generating a corresponding traffic object identification annotation for the one or more labelled images of that traffic object.

In several embodiments, the control system 10 of the ego vehicle 1 may transmit the selected one or more labelled images of the at least one object 4a, 4b to a remote server 15. Alternatively or additionally, in several embodiments, the ego vehicle 1 may store the selected one or more labelled images in a memory 12 of the ego vehicle 1 for a subsequent transmission to the remote server 15. The selected one or more labelled images may be used for generating a corresponding object identification annotation for the one or more labelled images of the at least one object 4a, 4b. Stated differently, the labelled images of the at least one object 4a, 4b which have been selected as candidates for identification of the at least one object 4a, 4b are sent to the remote server 15, where they are set to be annotated manually e.g. by human operators and/or automatically. The generated annotations may then be used for forming the training data set for the ML algorithms for object identification as mentioned previously.

In some embodiments, the control system 10 of the vehicle 1 is configured to store the selected one or more labelled images of the at least one object in the memory 12 of the vehicle 1 and generate the corresponding object identification annotation for the one or more labelled images of the at least one object. In other words, the ego vehicle 1 is configured for automatically generating the image annotations corresponding to the at least one object 4a, 4b by means of the processing circuitry 11 of the control system 10 of the vehicle and without the need for transmission of the labelled images to the remote server 15 for processing. Automatically generated image annotations may be used for forming the training data set for the ML algorithm for object identification.

In several embodiments the control system 10 of the ego vehicle 1 may further be configured to obtain a set of selected one or more labelled images of the at least one object from the remote server 15, transmitted to the server 15 by each vehicle 1, 2 comprised in the fleet of vehicles server. Additionally or alternatively, the control system 10 of the ego vehicle 1 may further be configured to obtain the set of selected one or more labelled images of the at least one object from a plurality of vehicles 1, 2 i.e. the vehicle fleet travelling on the road. The fleet of vehicles 1, 2 may be configured to be in communication directly e.g. via a connectivity solution such as via vehicle-to-vehicle (V2V) communication protocols or indirectly for instance via the external network 20 and the remote server 15 e.g. cloud server.

The set of selected one or more labelled images of the at least one object may thus comprise the one or more labelled images of the at least one object 4a, 4b produced and selected by each vehicle 1, 2 of the plurality of vehicles. The control system 10 may further be configured to generate the corresponding object identification annotation based on the obtained set of the selected one or more labelled images of the at least one object 4a, 4b based on the candidate data of the fleet of vehicles.

In some exemplary embodiments, the set of selected one or more images of the at least one object 4a, 4b received from the fleet of vehicles may be entered into a ranking scheme based on the corresponding outputs of the FSL model for the one or more images of each of the one or more objects 4a, 4b. The one or more images of the objects having an FSL output with a higher probability score than a threshold value may be ultimately elected for generating object identification annotations.

In several embodiments, the control system 10 of the ego vehicle 1 may be further configured to transmit the automatically generated image annotations to the remote server 15 for forming the training data set for the ML algorithm for object identification.

Additionally or alternatively, the control system 10 of the ego vehicle 1 may be further configured to utilize the automatically generated image annotations for forming the training data set for the ML algorithm configured for object identification. The formed training data set for the ML algorithm may be transmitted to the remote server 15 for centrally training the ML algorithm.

Additionally or alternatively, the formed training data set may be utilized by the control system 10 for training the ML algorithms and neural networks for object identification in a decentralized federated learning setting performed in the ego vehicle 1. The ML algorithm will consequently be trained by updating one or more model parameters of the ML algorithm based on the automated image annotations and training data set formed in the ego vehicle 1. This way the ML algorithm will be trained in the setting referred to as edge training setting that comprises federated or swarm learning schemes. To this end, the control system 10 may be further configured for transmitting the one or more updated model parameters of the ML algorithm to the remote server 15 and receiving a set of globally updated model parameters of the ML algorithm from the remote server 15. The set of globally updated parameters may be based on information comprising the one or more updated model parameters of the ML algorithm obtained from the plurality of vehicles 1, 2 i.e. the fleet of vehicles.

The control system 10 may be further configured to update the ML algorithm based on the received set of globally updated model parameters from the remote server 15. This way a more efficient way of continuously and efficiently updating the ML algorithm to a more accurate prediction model is provided.

In several embodiments and aspects the control system 10 may be further configured to obtain, from the remote server, an updated finite sub-set of annotated images being updated with the generated object identification annotation for the one or more labelled images of the at least one object. Additionally or alternatively, the control system 10 may be configured to update the finite sub-set of annotated images with the generated object identification annotation for the one or more labelled images of the at least one object. This way the support set is continuously updated with new information about the at least one target object class or the plurality of target object classes in the instances that they are comprised in the support set. Each newly associated object with its corresponding target object class will be utilized to improve and complement the finite sub-set, which may in turn be used iteratively for recognition and classification of further objects.

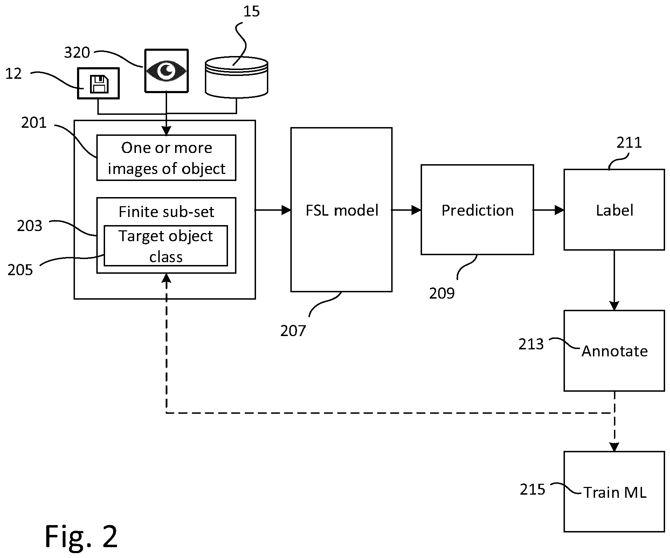

Fig. 2 is a schematic block diagram illustrating the FSL model deployed in the vehicle 1 or in each vehicle of the fleet of vehicles comprising a plurality of vehicles 1, 2. The FSL model 207 is configured to provide the prediction i.e. the preliminary association 209 between the at least one object 4a, 4b and the obtained finite sub-set 203 of annotated images of its corresponding target object class 205. The one or more images 201 of the detected object 4a, 4b by the sensor system 320 of the vehicle 1 as well as the finite sub-set 203 are provided as input to the FSL model 207. In several embodiments and aspects the one or more images, 201 captured by the sensor system 320 may be provided to the FSL model 207 in real time i.e. in an online mode. In several embodiments, additionally or alternatively, the one or more images 201 captured by the sensor system 320 may be stored in the memory 12 of the vehicle 1 and thus previously captured one or more images may be obtained from the memory 12 to be provided as input to the FSL model 207 in an offline mode. In several embodiments additionally or alternatively, the one or more images 201 captured by the sensor system 320 may be transmitted to the remote server 15. The one or more images 201 captured by the sensor system 320 may be stored in a central database of the remote server 15 and thus previously captured one or more images may be obtained from the remote server 15 to be provided as input to the FSL model 207 in an offline mode. The FSL model may at least partly be deployed in the vehicle 1. The FSL model may additionally or alternatively, be deployed in the remote server 15 and process the obtained one or more images in the offline mode.

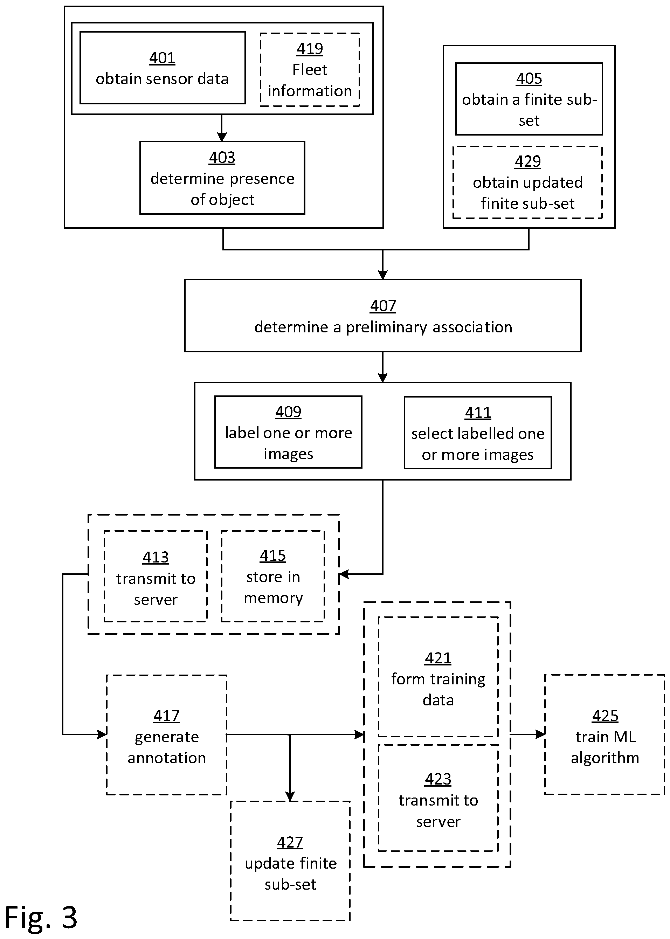

Based on the prediction 209 of the FSL model determining the preliminary association between the object 4a, 4b and the target object class 205, the one or more images 201 of the object 4a, 4b are labelled 211 as candidates and later annotated 213 to establish that the object 4a, 4b belongs to the corresponding target object class 205. The annotated one or more images may be used to form training data for training 215 the ML algorithm configured for object identification. The detailed embodiments of the presented technology in the block diagram of Fig. 2 are further elaborated in the flowchart of a method 400 in Fig. 3.

Fig. 3 shows a flowchart of a method 400 according to various aspects and embodiments of the present disclosure for determining an association of at least one object to a target object class, wherein the at least one object 4a, 4b is present in a surrounding environment of a vehicle 1 travelling on a road 22. As shown with reference to the example of Fig. 1, the at least one object 4a, 4b is present in the illustrated portion 24 of the road 22 on which the vehicles 1, 2 are travelling.

The method 400 comprises obtaining 401 sensor data from a sensor system 320 of the vehicle 1, the sensor data comprising one or more images, captured by a vehicle-mounted camera, of the surrounding environment of the vehicle. The method 400 further comprises determining 403 a presence of the at least one object 4a, 4b in the surrounding environment of the vehicle 1 based on the obtained sensor data. Further, the method 400 comprises obtaining 405 a finite sub-set of annotated images being representative of at least the target object class, the finite sub-set comprising a number of annotated images smaller than a threshold value number. The method 400 further comprises determining 407, based on the obtained sensor data comprising one or more images of the at least one object 4a, 4b and the obtained finite sub-set of annotated images, a preliminary association between the at least one object 4a, 4b and the target object class. When the preliminary association between the at least one object 4a, 4b and the target object class is determined, the method 400 further comprises producing 409 an image label for the one or more images of the at least one object 4a, 4b in order to obtain one or more labelled images indicating the preliminary association of the at least one object 4a, 4b with the target object class.

In several embodiments and aspects, the method 400 may further comprise determining 407 the preliminary association between the at least one object 4a, 4b and the target object class by means of a few shot learning model.

Accordingly, the method 400 further comprises selecting 411 the one or more labelled images for generating a corresponding object identification annotation for the one or more labelled images. In an instance that a preliminary association between the at least one object 4a, 4b and the target object class is not determined, the method 400 may revert to obtaining further sensor data or any of the previous method steps accordingly. In several aspects and embodiments, the method **400** may be performed by a control system 10 of the vehicle 1 comprising processing circuitry 11 configured for performing the various embodiments and steps of the method 400.

Thus, it should be noted that all the embodiments, elements, features, examples and advantages described earlier with reference to the control system 10, or the processing circuitry 11 of the control system 10 and Figs. 1 - 2 analogously and equally apply to various embodiments of the methods **400** described herein with reference to Fig. 3.

According to some embodiments, the at least one object 4a, 4b may comprise at least one road-side traffic object comprising a traffic sign or a traffic signal.

According to several embodiments, the method **400** may further comprise transmitting 413 the selected one or more labelled images of the at least one object to a remote server 15 and/or storing **415** the selected one or more labelled images in a memory 12 of the vehicle 1 for a subsequent transmission to the remote server 15. The transmitted selected one or more labelled images may be utilized at the remote server 15 for generating **417** the corresponding object identification annotation based at least on the transmitted one or more labelled images of the at least one object from the vehicle. The generation of the corresponding object identification annotation at the remote server 15 may be performed manually or automatically.

In embodiments and aspects herein, the preliminary association of the at least one object 4a, 4b with its corresponding target object class may be linked to a confidence or certainty metric which is to be verified in a subsequent step of manually or automatically annotating the labelled images.

It is therefore verified with an associated certainty measure that the at least one object 4a, 4b belongs to the corresponding target object class as preliminarily determined at the step 407. Based on the verified association of the at least one object 4a, 4b with the target object class, the corresponding object identification annotation for the at least one object 4a, 4b is generated. As mentioned earlier, the step of verification of the association between the at least one object and the target object class may at least partly be performed manually or automatically and may also be a step comprised in the process of generating the corresponding object identification annotation for the one or more labelled images of the at least one object 4a, 4b. In other words, generating the corresponding object identification annotation for the one or more labelled images is indicative of the verified association of the at least one object to its corresponding target object class.

In several embodiments, the method **400** may further comprise storing **415** the selected one or more labelled images in a memory 12 of the vehicle 1 and generating **417** the corresponding object identification annotation for the one or more labelled images of the at least one object. This way the verified association of the at least one object to its corresponding target object class as well as generating the corresponding object identification annotation for the one or more labelled images of the at least one object is performed in an automated manner by the control system 10 of the vehicle 1. Thus, the corresponding object identification annotation for the one or more images of the at least one object is generated automatically by the ego vehicle 1 which may then be used for forming a training data set for an ML algorithm.

In several embodiments, the method 400 may further comprise obtaining 419 a set of selected one or more labelled images of the at least one object 4a, 4b from a remote server 15 and/or from a plurality of vehicles 1, 2 travelling on the road 22. The set of selected one or more labelled images of the at least one object 4a, 4b in this case comprises the one or more labelled images of the at least one object 4a, 4b which is produced and selected by each vehicle of the plurality of vehicles 1, 2. The method 400 may further comprise generating 417 the corresponding object identification annotation based on the obtained set of the selected one or more labelled images of the at least one object 4a, 4b provided by the plurality of vehicles 1, 2. This way the accumulated information about the at least one object 4a, 4b produced by a fleet of vehicles 1, 2, is obtained 419 and harnessed for generating 417 the corresponding object identification annotation for the at least one object 4a, 4b based on the obtained set of the selected one or more labelled images of the at least one object 4a, 4b. Advantageously, a higher certainty is achieved based on fleet information for establishing the association of the at least one object with the corresponding target object class as well as for generating the annotated images of the at least one object 4a, 4b. In various aspects and embodiments, the method 400 may additionally comprise forming 421 a training data set for a machine learning algorithm configured for identification of the at least one object based on the generated object identification annotation. Thus, the ego vehicle 1 may generate the training data set for the ML algorithm, wherein the ML algorithm will be configured for identification of objects for instance for identification of the at least one object 4a, 4b.

In several embodiments and aspects, the method 400 may further comprise transmitting 423 the generated object identification annotation to the remote server 15 for forming 421 the training data set for the ML algorithm. This way the formed training data set may be used for centrally training 425 the ML algorithm at the remote server 15.

Even further, in some embodiments the method 400 may further comprise training 425 the ML algorithm in a decentralized federated learning setting performed in the ego vehicle 1 by updating one or more model parameters of the ML algorithm based on the formed training data set.

In several embodiments and aspects, the method **400** may further comprise obtaining 429, from the remote server 15, an updated finite sub-set of annotated images being updated **427** with the generated object identification annotation for the one or more labelled images of the at least one object. Additionally or alternatively the method **400** may comprise updating **427** the finite sub-set of annotated images with the generated object identification annotation for the one or more labelled images of the at least one object. This way the support set is continuously updated with new information i.e. newly classified objects and their respective at least one target object class or the plurality of target object classes in the instances that they are comprised in the support set. Each newly associated object with its corresponding target object class is utilized to improve and complement the finite sub-set which may be used iteratively for recognition and classification of further objects. The step of updating the finite sub-set may be performed in the remote server 15, and communicated with the vehicles 1, 2. The FSL model may thus be updated in an online mode i.e. continuously with each novel object being classified and added to the support set in real time. Additionally or alternatively, the FSL may be updated with the new information and the updated support set at a later instance or in an offline mode i.e. wherein the updated support set with the classified novel objects is deployed in the vehicles 1, 2 and uploaded to the FSL model at certain time intervals, with regularly scheduled updates, etc.

Similarly, in several embodiments, the support set may at least partly be updated in the vehicles 1, 2 in addition or as an alternative to the support set being updated **427** in the remote server 15. Likewise, the updating **427** of the support set, with newly classified novel objects, performed by the control system 10 of the vehicles 1, 2 may be executed in the online or offline mode.

Executable instructions for performing these functions and embodiments of the method **400** are, optionally, included in a non-transitory computer-readable storage medium or other computer program product configured for execution by one or more processors.

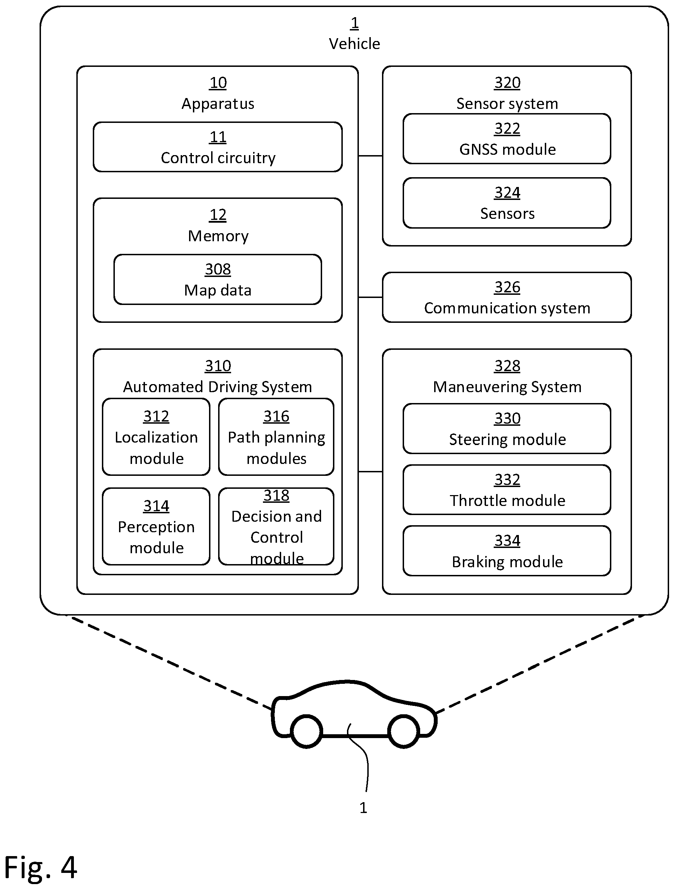

Fig. 4 is a schematic illustration of an ADS-equipped vehicle 1 comprising a control system 10, which may also be referred to as the control apparatus or device 10 or simply the apparatus 10. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the control system 10 may form a part of the ADS 310, i.e. the control system 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 4. Moreover, the vehicle 1 may comprise further elements than those shown in Fig. 4. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 4 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 328. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320. The ADS 310 may also comprise other modules such as a path planning module 316.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media—e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

As previously mentioned, it should be appreciated that parts of the described solution may be implemented either in the vehicle 1, in a system located external the vehicle 1, or in a combination of internal and external the vehicle; for instance in a server 15 in communication with the vehicle, a so called cloud solution. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A method for determining an association of at least one object to a target object class, the at least one object being present in a surrounding environment of a vehicle travelling on a road, the method comprising:
obtaining sensor data from a sensor system of the vehicle, the sensor data comprising one or more images, captured by a vehicle-mounted camera, of the surrounding environment of the vehicle;
determining a presence of the at least one object in the surrounding environment of the vehicle based on the obtained sensor data;
obtaining a finite sub-set of annotated images being representative of at least the target object class, the finite sub-set comprising a number of annotated images smaller than a threshold value number;
determining, based on the obtained sensor data comprising one or more images of the at least one object and the obtained finite sub-set of annotated images, a preliminary association between the at least one object and the target object class; and
when the preliminary association is determined:
producing an image label for the one or more images of the at least one object in order to obtain one or more labelled images indicating the preliminary association of the at least one object with the target object class; and
selecting the one or more labelled images for generating a corresponding object identification annotation for the one or more labelled images.

2. The method according to claim 1, wherein the at least one object comprises at least one road-side traffic object comprising a traffic sign or a traffic signal.

3. The method according to any of the claims 1 or 2, wherein the method further comprises:
transmitting the selected one or more labelled images of the at least one object to a remote server and/or storing the selected one or more labelled images in a memory of the vehicle for a subsequent transmission to the remote server for generating the corresponding object identification annotation based at least on the transmitted one or more labelled images of the at least one object from the vehicle.

4. The method according to any one of claims 1 or 2, wherein the method further comprises:
storing the selected one or more labelled images in a memory of the vehicle; and
generating the corresponding object identification annotation for the one or more labelled images of the at least one object.

5. The method according to claim 4, wherein the method further comprises:
obtaining a set of selected one or more labelled images of the at least one object from a remote server and/or from a plurality of vehicles travelling on the road, wherein the set of selected one or more labelled images of the at least one object comprises the one or more labelled images of the at least one object produced and selected by each vehicle of the plurality of vehicles;
generating the corresponding object identification annotation based on the obtained set of the selected one or more labelled images of the at least one object.

6. The method according to claims 4 or 5, wherein the method further comprises:
forming a training data set for a machine learning, ML, algorithm configured for identification of the at least one object based on the generated object identification annotation; or
transmitting the generated object identification annotation to a remote server for forming the training data set for the machine learning, ML, algorithm.

7. The method according to any one of claims 3-5, wherein the method further comprises:
obtaining, from the remote server, an updated finite sub-set of annotated images being updated with the generated object identification annotation for the one or more labelled images of the at least one object; or
updating the finite sub-set of annotated images with the generated object identification annotation for the one or more labelled images of the at least one object.

8. The method according to any one of the preceding claims, wherein the method further comprises determining the preliminary association between the at least one object and the target object class by means of a few shot learning model.

9. The method according to any one of the preceding claims, wherein the vehicle comprises an Automated Driving System, ADS.

10. The method according to any one of the preceding claims, wherein the method is performed by a processing circuitry of the vehicle.

11. A computer-readable storage medium comprising instructions which, when executed by one or more processors of an in-vehicle computer, causes the in-vehicle computer to carry out the method according to any one of the preceding claims.

12. A computer program product comprising instructions which, when the program is executed by one or more processors of an in-vehicle computer, causes the in-vehicle computer to carry out the method according to any one of claims 1 - 10.

13. A system for determining an association of at least one object to a target object class, the at least one object being present in a surrounding environment of a vehicle travelling on a road, the system comprising processing circuitry configured to:
obtain sensor data from a sensor system of the vehicle, the sensor data comprising one or more images, captured by a vehicle-mounted camera, of the surrounding environment of the vehicle;
determine a presence of the at least one object in the surrounding environment of the vehicle based on the obtained sensor data;
obtain a finite sub-set of annotated images being representative of at least the target object class, the finite sub-set comprising a number of annotated images smaller than a threshold value number;
determine, based on the obtained sensor data comprising one or more images of the at least one object and the obtained finite sub-set of annotated images, a preliminary association between the at least one object and the target object class; and
when the preliminary association is determined:
produce an image label for the one or more images of the at least one object in order to obtain one or more labelled images indicating the preliminary association of the at least one object with the target object class; and
select the one or more labelled images for generating a corresponding object identification annotation for the one or more labelled images.

14. The system according to claim 13, wherein the processing circuitry is further configured to:
transmit the selected one or more labelled images of the at least one object to a remote server and/or storing the selected one or more labelled images in a memory of the vehicle for a subsequent transmission to the remote server for generating the corresponding object identification annotation based at least on the transmitted one or more labelled images of the at least one object from the vehicle.

15. A vehicle comprising:
one or more vehicle-mounted sensors configured to monitor a surrounding environment of the vehicle;
a localization system configured to monitor a geographical position of the vehicle; and
a system according to any one of claims 13 or 14.
